# FASCICULE DE BREVET EUROPEEN

(11) **EP 1 698 489 B1**
(45) Date de publication et mention de la délivrance du brevet: **22.10.2008**
(21) Numéro de dépôt: 06300190.3
(22) Date de dépôt: 02.03.2006
(51) Int. Cl.: B60B 21/06

(54) **Dispositif de renforcement de jantes de bicyclettes et roues comprenant une telle jante**
Verstärkungsvorrichtung für Fahrradfelgen und Räder mit solcher Felge
Reinforcement device for bicycle rims and wheels with such a rim

(30) Priorité: 03.03.2005 FR 0550566
(43) Date de publication de la demande: 06.09.2006
(73) Titulaire: Rigida International BV, 5831 AC Boxmeer (NL)
(72) Inventeur: Deguise, Patrick, 60400 Pont L'Eveque (FR)
(74) Mandataire: Leherte, Georges M.L.M.

(56) Documents cités:
- EP-A- 1 428 685
- EP-A- 1 475 246
- EP-A- 1 486 352
- DE-U1- 20 319 177
- FR-A- 2 798 622
- GB-A- 189 802 536
- US-A1- 2003 090 141
- US-A1- 2004 222 691
- US-B1- 6 736 462

## Description

L'invention se rattache au secteur technique des roues de bicyclettes et véhicules similaires et de leur jante en particulier.

On rappelle qu'une roue de bicyclettes est constituée par l'agencement combinatoire de plusieurs moyens, à savoir un moyeu central, une jante périphérique et des rayons de liaison entre la jante et le moyeu. Les rayons sont répartis selon deux nappes et leur nombre est en relation avec la rigidité de la roue souhaitée. De manière bien connue, la jante est réalisée à partir d'un profilé aluminium ou acier extrudé avec simple ou double pont. Ces profilés de jante sont dessinés en fonction de leur utilisation, et leurs épaisseurs varient en fonction des contraintes mécaniques supportées sur les différents points du profil en cours d'utilisation. Les propriétés mécaniques d'une jante reposent sur la résistance statique et dynamique à l'effort. Son poids doit être optimisé afin de lui donner le meilleur rendement possible sans nuire à sa rigidité latérale et verticale. La fixation et accrochage des rayons à la jante, à l'aide d'oeillets de rivage récepteurs de l'extrémité en regard de chaque rayon, et préalablement disposés sur la jante.

DE 2 031 977 U décrit une jante de bicyclette selon un profilé annulaire uniforme avec un simple pont où les rayons sont fixés par rivetage.

Ainsi, en fonction des conditions d'utilisation des jantes, et en particulier pour des bicyclettes dites « haut de gamme » pour les sportifs pratiquant la compétition ou ayant une grande et régulière pratique de ce sport, la recherche de l'allégement de la bicyclette est l'objectif constant. Cela se traduit par la reconsidération de tous les composants de la bicyclette par des choix de matière, des recherches de profils, d'amélioration et simplification des composants.

Concernant les jantes de roues de bicyclettes, cette obligation d'allègement est aussi un objectif, tout en garantissant au composant concerné les caractéristiques de rigidité en fonction des sollicitations. Cette recherche d'allégement sur les jantes de bicyclettes et véhicules similaires, et pour les motos de compétition, s'est traduite en faisant varier les profils de la jante et son épaisseur entre les zones de fixation des rayons sur la jante et les espaces intercalaires entre ces zones, et ce quel que soit le matériau constitutif de la jante.

Le brevet US 452.649 de 1891 prévoyait déjà un profil différencié entre la zone de fixation des rayons et les extrémités consécutifs entre deux zones de fixation.

La publication HONDA sur des roues de motos d'endurance, référence RCB 1000 de 1977, prévoyait déjà ainsi un voile intérieur qui permet la fixation des rayons, en étant usiné ou retiré au moulage des jantes entre chaque point de fixation pour la réduction des masses non suspendues.

L'allégement de la jante a été proposé aussi pour réduire, après filage, l'épaisseur de la paroi de la jante par un usinage chimique décrit dans EP 715.001 et EP 714.792.

L'usinage mécanique de la jante a, à nouveau, été proposé dans le brevet FR 2.798.622, dans les zones intermédiaires entre les zones de fixation des rayons. Cet usinage est effectué de manière à donner une variation d'épaisseur proprement entre les valeurs extrêmes d'épaisseurs entre les zones considérées.

En pratique, si techniquement ces procédures de traitement des jantes de roues de bicyclettes et de motos sont au point et ont fait l'objet d'exploitation, leur mise en oeuvre en fabrication reste très coûteuse de par les opérations d'usinage chimique et mécanique en elles-mêmes. Il faut des outillages spécifiques, et en pratique ce type de roues est réservé à une clientèle sélectionnée de sportifs et de praticiens accomplis recherchant la performance.

La démarche du demandeur a été de rechercher une nouvelle conception de fabrication de jantes de bicyclettes et véhicules similaires alliant recherche de légèreté et rigidité qui soit d'un coût de fabrication et de montage moindre, accessible à une clientèle de cyclistes beaucoup plus large, tout en leur offrant des gains de poids sur les jantes.

Une autre démarche du demandeur a été de proposer, par un nouveau concept, une possibilité de personnaliser d'avantage la configuration de jantes tout en répondant aux objectifs d'allègement et de maîtrise et réduction des coûts de fabrication.

Ces buts et d'autres encore ressortiront bien de la suite de la description.

Selon une première caractéristique de l'invention, la jante de bicyclette formée selon un profilé annulaire uniforme, avec un simple ou double pont, est remarquable en ce qu'elle comprend, aux endroits de fixation des rayons par rivetage, l'adjonction d'un dispositif de renforcement par l'extérieur rapporté fixé à la jante et permettant de rigidifier la zone de fixation et de liaison des rayons, la jante elle-même ayant une épaisseur matière diminuée, et en ce que le dispositif de renforcement est constitué par une pluralité de plaquettes profilées de renforcement disposées aux endroits de fixation des rayons, chaque plaquette d'épaisseur et de forme déterminée pouvant couvrir au moins une zone de liaison des rayons à la jante.

Ces caractéristiques et d'autres encore ressortiront bien de la suite de la description.

Pour fixer l'objet de l'invention illustrée d'une manière non limitative aux figures des dessins où :
- la figure 1 est une vue partielle d'une jante de bicyclettes équipée du dispositif de renforcement sous forme de plaquettes à l'endroit de fixation des rayons.
- les figures 2A, 2B, 2C sont des vues illustrant des variantes du profil d'extrémité des plaquettes.
- la figure 3 est une vue de dessus partielle d'une jante incluant, sur la zone considérée représentée, trois plaquettes pour trois zones de fixation des rayons.
- la figure 4 est une vue en variante où une plaquette rapportée reçoit la fixation de deux rayons consécutifs.

Afin de rendre plus concret l'objet de l'invention, on le décrit maintenant d'une manière non limitative aux figures des dessins.

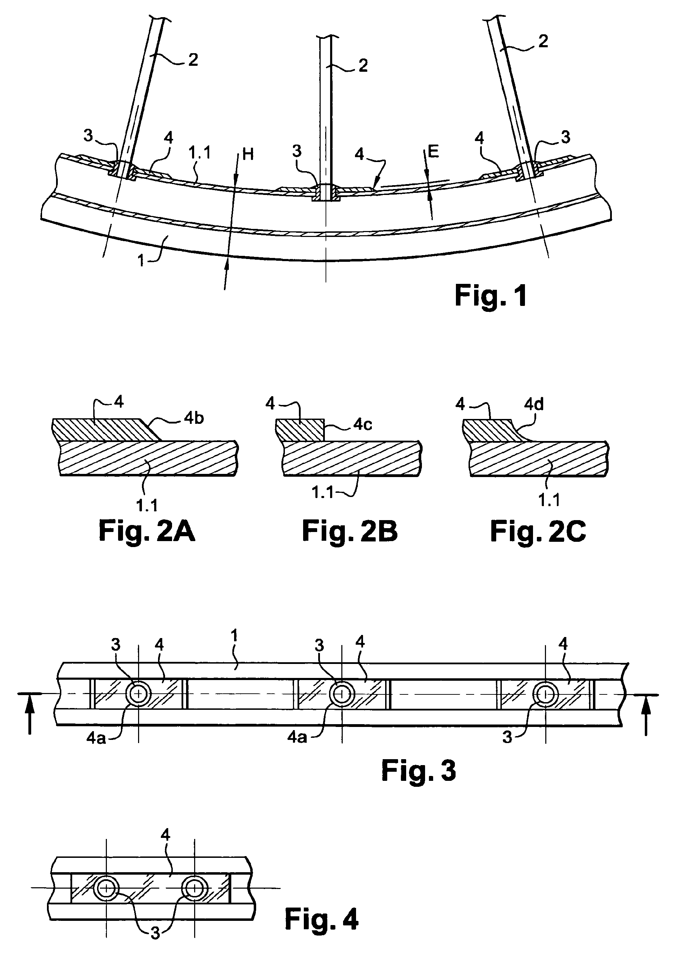

La jante pour roues de bicyclettes et véhicules similaires est représentée partiellement figure 1 en étant référencée par (1). Elle peut être à simple ou double pont. Les rayons sont référencés par (2) et sont fixés par rivetage (3) avec des oeillets correspondant à la jante de manière connue. Selon l'invention, la jante est agencée à l'endroit de fixation des rayons avec un dispositif de renforcement qui est constitué par un ensemble de plaquettes (4) profilées de renforcement, réalisées en tous matériaux, métalliques, ou en carbone ou matériaux composites ou autres. Le profilé de jantes présente une épaisseur matière du pont inférieur volontairement diminuée lors de sa conception. Selon une hauteur (H), celle-ci est obtenue directement au moment de l'extrusion du profil. Ainsi, pour obtenir l'épaisseur matière souhaitée autour du point d'accroche et fixation des rayons, les plaquettes sont rapportées selon des dimensions et épaisseurs déterminées pour répondre aux exigences de rigidité souhaitées avec une épaisseur (E). Ces plaquettes (4) sont réalisées par moulage ou par découpage et sont assemblées sur le pont inférieur (1.1) par collage et par rivetage. Ces plaquettes sont établies avec une ouverture (4a) pour le passage des oeillets de fixation. Les oeillets qui jouent le rôle de rivet permettent d'associer les plaquettes solidairement à une jante. Ces plaquettes de renfort (4) ont donc pour but d'accroître l'épaisseur matière sur une zone limitée de part et d'autre de la zone de fixation des rayons ou groupement de rayons, comme représentés à titre d'exemple aux figures 3 et 4, en laissant les épaisseurs d'origine dans les longueurs d'intervalles. Les plaquettes de renfort (4) sont dotées à leurs extrémités dans le sens de leur longueur, soit d'un chanfrein (4b), soit d'un usinage droit (4c), soit d'un rayon de courbure (4d) (figures 2A, 2B, 2C).

En variante, le profil des plaquettes de renfort peut être du côté orienté aux rayons avec une configuration bombée, ou en chapeau de gendarme, pouvant augmenter l'épaisseur de renfort et contribuer à la rigidité de la roue obtenue.

Les plaquettes de renfort sont fixées par l'extérieur par collage en plus de la zone de fixation de l'oeillet pour rivetage. Ce collage peut être effectué par des procédés chimiques ou thermiques ou autres.

La solution apportée par l'invention par l'apport des plaquettes de renfort est économiquement très avantageuse par rapport à l'art antérieur, et en particulier par rapport au procédé d'usinage mécanique des jantes.

En outre, un autre intérêt réside dans la possibilité de faire varier le profil des plaquettes de renfort participant ainsi à l'esthétique de la jante et de la roue.

## Revendications

1. Jante de bicyclette formée selon un profilé annulaire uniforme (1) avec un simple ou double pont, les rayons (2) étant fixés par rivetage (3) **caractérisée en ce qu'**elle comprend, aux endroits de fixation des rayons (2) par rivetage, l'adjonction d'un dispositif de renforcement (4) rapporté par l'extérieur fixé à la jante et permettant de rigidifier la zone de fixation et de liaison des rayons, la jante elle-même ayant une épaisseur matière diminuée, et **en ce qu'**il est constitué par une pluralité de plaquettes (4) profilées disposées aux endroits de fixation des rayons, chaque plaquette d'épaisseur et de forme déterminée pouvant couvrir au moins une zone de liaison des rayons à la jante.

2. Dispositif de renforcement, selon la revendication 1, **caractérisé en ce que** les plaquettes sont réalisées en matériau composite.

3. Dispositif de renforcement, selon la revendication 1, **caractérisé en ce que** les plaquettes sont réalisées en matériau carbone.

4. Dispositif de renforcement, selon la revendication 1, **caractérisé en ce que** les plaquettes sont réalisées en matériau métallique.

5. Dispositif de renforcement, selon la revendication 1, **caractérisé en ce que** les plaquettes sont réalisées par moulage.

6. Dispositif de renforcement, selon la revendication 1, **caractérisé en ce que** les plaquettes sont réalisées par découpage.

7. Dispositif de renforcement, selon la revendication 1, **caractérisé en ce que** les plaquettes présentent une ouverture (4a) d'accroche des rayons.

8. Dispositif de renforcement, selon la revendication 1, **caractérisé en ce que** le profil des plaquettes de renfort peut être du côté orienté aux rayons avec une configuration bombée, ou en chapeau de gendarme, pouvant augmenter l'épaisseur de renfort et contribuer à la rigidité de la roue obtenue.

9. Dispositif de renforcement, selon la revendication 1, **caractérisé en ce que** les plaquettes de renfort sont fixées par collage en plus de la zone de fixation de l'oeillet pour rivetage.

## Claims

1. Bicycle rim formed according to a uniform annular profile (1) with a single or double bridge, the spokes (2) being fixed by riveting (3), **characterised in that** it comprises, at the points where the spokes (2) are fixed by riveting, the addition of a reinforcement device (4) attached from the outside, fixed to the rim and stiffening the spoke fixing and connection zone, the rim itself having a reduced material thickness, and **in that** it is formed by a plurality of profiled plates (4) disposed at the points where the spokes are fixed, each plate of given thickness and shape being able to cover at least one area where the spokes are connected to the rim.

2. Reinforcement device according to claim 1, **characterised in that** the plates are produced from composite material.

3. Reinforcement device according to claim 1, **characterised in that** the plates are produced from carbon material.

4. Reinforcement device according to claim 1, **characterised in that** the plates are produced from metal material.

5. Reinforcement device according to claim 1, **characterised in that** the plates are produced by moulding.

6. Reinforcement device according to claim 1, **characterised in that** the plates are produced by cropping.

7. Reinforcement device according to claim 1, **characterised in that** the plates have an opening (4) for attaching the spokes.

8. Reinforcement device according to claim 1, **characterised in that** the profile of the reinforcing plates can be on the side oriented towards the spokes with a curved configuration or in the shape of a gendarme's cap, able to increase the reinforcing thickness and contribute to the stiffness of the wheel obtained.

9. Reinforcement device according to claim 1, **characterised in that** the reinforcing plates are fixed by adhesive bonding in addition to the eyelet fixing area for riveting.

## Patentansprüche

1. Fahrradfelge, die nach einem gleichförmigen ringförmigen Profil (1) mit einer einfachen oder doppelten Brücke ausgebildet ist, wobei die Speichen (2) durch Nieten (3) befestigt sind, **dadurch gekennzeichnet, dass** sie an den Befestigungsstellen der Speichen (2) durch Nieten das Hinzufügen einer Verstärkungsvorrichtung (4) aufweist, die von außen her angebaut und an der Felge befestigt wird und es erlaubt, die Befestigungs- und Verbindungszone der Speichen zu versteifen, wobei die Felge selbst eine verringerte Materialstärke hat, und dass sie aus mehreren Profilplättchen (4) besteht, die an den Befestigungsstellen der Speichen angeordnet sind, wobei jedes Plättchen mit bestimmter Stärke und Form mindestens einen Verbindungsbereich der Speichen mit der Felge decken kann.

2. Verstärkungsvorrichtung nach Anspruch 1, **dadurch gekennzeichnet, dass** die Plättchen aus Verbundwerkstoff hergestellt sind.

3. Verstärkungsvorrichtung nach Anspruch 1, **dadurch gekennzeichnet, dass** die Plättchen aus Kohlenstoffmaterial hergestellt sind.

4. Verstärkungsvorrichtung nach Anspruch 1, **dadurch gekennzeichnet, dass** die Plättchen aus Metallwerkstoff hergestellt sind.

5. Verstärkungsvorrichtung nach Anspruch 1, **dadurch gekennzeichnet, dass** die Plättchen durch Formen hergestellt sind.

6. Verstärkungsvorrichtung nach Anspruch 1, **dadurch gekennzeichnet, dass** die Plättchen durch Ausschneiden hergestellt sind.

7. Verstärkungsvorrichtung nach Anspruch 1, **dadurch gekennzeichnet, dass** die Plättchen eine Öffnung (4a) zum Anhängen der Speichen aufweisen.

8. Verstärkungsvorrichtung nach Anspruch 1, **dadurch gekennzeichnet, dass** das Profil der Verstärkungsplättchen auf der Seite, die zu den Speichen gerichtet ist, eine gewölbte Konfiguration oder Glockenform haben kann, die die Stärke der Verstärkung erhöhen und zur Steifigkeit des erzielten Rades beitragen kann.

9. Verstärkungsvorrichtung nach Anspruch 1, **dadurch gekennzeichnet, dass** die Verstärkungsplättchen durch Kleben zusätzlich zur Befestigungszone der Öse zum Nieten befestigt sind.
